# DEMANDE DE BREVET EUROPEEN

(11) **EP 2 093 310 A1**
(43) Date de publication de la demande: **26.08.2009**
(21) Numéro de dépôt: 09151960.3
(22) Date de dépôt: 03.02.2009
(51) Int. Cl.: C25B 1/24, C25B 13/00

(54) **Installation d'électrolyse**

(30) Priorité: 14.02.2008 FR 0850943
(71) Demandeur: Snecma Propulsion Solide, 33187 Le Haillan Cedex (FR)
(72) Inventeur: Maumus, Jean-Pierre, 33160, SAINT MEDARD EN JALLES (FR); Dumont, Charles, 33380, LACANAU DE MIOS (FR); Abbe, François, 33127, MARTIGNAS (FR)
(74) Mandataire: Desormiere, Pierre-Louis

(57) **Abrégé**

L'invention concerne une installation d'électrolyse (200) comprenant des rangées d'électrodes (203, 204) au moins partiellement immergées dans un électrolyte liquide (202) dégageant une ou plusieurs espèces gazeuses (208, 209) de nature corrosive au niveau des électrodes, au moins une membrane de séparation (14) étant disposée entre deux rangées d'électrodes adjacentes.

Les membranes (214, 215, 216, 217) sont chacune constituées d'un renfort en fibres de carbone rigidifié par une matrice carbone et présentent une partie poreuse perméable aux ions et imperméable à la ou les espèces gazeuses (208, 209) dégagées au niveau des électrodes (203, 204).

## Description

### Arrière-plan de l'invention

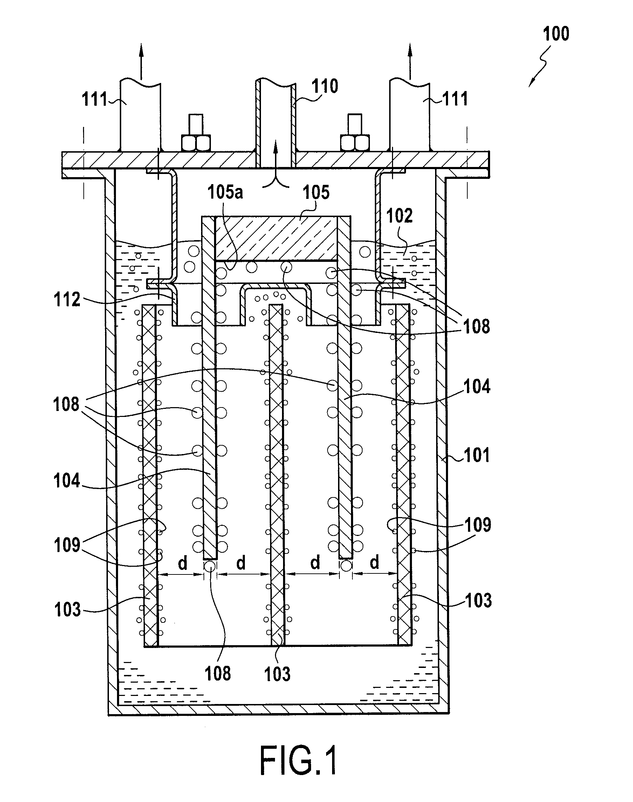

La présente invention se rapporte au domaine des installations ou cellules d'électrolyse. La figure 1 illustre schématiquement une installation ou cellule d'électrolyse 100 utilisée pour la production de fluor. L'installation 100 est composée d'une cuve 101 contenant un électrolyte 102, par exemple une solution d'acide fluorhydrique (HF), et dans lequel sont plongées deux types d'électrodes, à savoir des cathodes 103 et des anodes 104. Les anodes 104 sont fixées et connectées électriquement de chaque côté d'une barre omnibus 105 (ou "bus-bar"). La barre omnibus 105 sert à la fois de support et de distributeur de courant d'électrolyse pour les anodes 104. De façon bien connue, la barre omnibus 105 est reliée à la borne positive d'un générateur de courant continu (non représenté sur la figure) tandis que les cathodes 103 sont reliées à la borne négative du générateur. Les anodes 104 sont réparties longitudinalement de chaque côté de la barre omnibus 105 et s'étendent au-delà de la face inférieure 105a de la barre omnibus.

La figure 1 représente l'installation d'électrolyse 100 lors de son fonctionnement, c'est-à-dire lorsque les électrodes 103, 104 sont plongées dans l'électrolyte et alimentées par le générateur de courant continu. Dans le cas, par exemple, d'un électrolyte composé d'acide fluorhydrique, l'électrolyse entraîne un dégagement de bulles de fluor gazeux 108 au niveau des anodes 104 et un dégagement de bulles d'hydrogène 109 au niveau des cathodes 103. Les bulles de ces deux espèces gazeuses remontent à la surface de l'électrolyte et sont collectées par des conduits indépendants 110 et 111 au niveau de la partie supérieure de l'installation d'électrolyse 100. Un diaphragme 112 est disposé au niveau de la partie supérieure des électrodes pour permettre la collecte sélective des bulles de fluor gazeux 108 par le conduit 110, d'une part, et des bulles d'hydrogène 109 par les conduits 111 d'autre part.

Les cathodes 104 et les anodes 103 sont espacées les unes des autres d'une distance déterminée d afin d'empêcher que l'hydrogène et le fluor se dégageant sous forme gazeuse ne se mélangent. Cette distance d permet d'assurer une remontée des bulles de fluor gazeux 108 le long des anodes 104 sans risque de contact avec les bulles d'hydrogène 109 qui remontent le long des cathodes 103.

Cependant, un tel espacement entre les anodes et les cathodes est préjudiciable au rendement de l'installation d'électrolyse. En effet, le rendement électrochimique ou rendement Faraday de l'installation d'électrolyse, qui est le rapport du volume de gaz réellement produit (ici le fluor) au volume de gaz calculé à partir de l'énergie électrique fournie, dépend en particulier de la distance entre les anodes et les cathodes. En d'autres termes, le rendement de Faraday diminue à mesure que l'on éloigne les cathodes et les anodes les unes des autres. Par ailleurs, comme illustrée sur la figure 1, la distance d imposée entre les différentes rangées d'électrodes 103 et 104 limite le nombre de rangées d'électrodes qui peuvent être disposées à l'intérieur de la cuve 101, ce qui pénalise la productivité de l'installation d'électrolyse.

Afin de diminuer la distance entre les cathodes et les anodes, il est connu d'interposer entre celles-ci une membrane. Toutefois, dans le cas d'une installation d'électrolyse destinée à produire des espèces gazeuses corrosives telles que le fluor, il faut disposer d'une membrane ayant des caractéristiques de résistance bien particulières. En effet, dans le cas d'une production de fluor par électrolyse comme décrit précédemment, les bulles de fluor gazeux dégagées provoquent la corrosion ainsi que l'érosion des éléments de l'installation avec lesquelles elles sont en contact lors de l'électrolyse. Une membrane disposée à proximité des anodes se trouve en contact avec la plupart des bulles de fluor remontant vers la surface de l'électrolyse. La membrane subit alors le phénomène conjugué de corrosion-érosion résultant de la nature chimique de l'espèce gazeuse constituant les bulles ainsi que de la circulation de ces dernières le long de la membrane. La membrane utilisée doit en outre être suffisamment rigide pour ne pas se déplacer sous l'effet du mouvement du bain d'électrolyte ou des bulles de manière à garantir une bonne séparation entre les espèces dégagées et éviter tout contact avec les électrodes.

Les matériaux actuellement utilisés pour réaliser les membranes de séparation ne permettent pas d'offrir une résistance suffisante au phénomène de corrosion-érosion et risquent, par une dégradation prématurée, d'être perméables aux espèces gazeuses dégagées. Une solution pour assurer une meilleure résistance serait d'augmenter l'épaisseur de la membrane mais cela reviendrait à augmenter la distance entre les cathodes et les anodes et à diminuer, par conséquent, le rendement de Faraday et la productivité de l'installation.

### Objet et résumé de l'invention

La présente invention a pour but de remédier aux inconvénients précités en proposant de nouvelles conceptions d'installations d'électrolyse comprenant des membranes de séparation qui permettent de rapprocher les électrodes constituant les zones anodiques et cathodiques et qui résistent bien au phénomène de corrosion-érosion mentionné précédemment.

A cet effet, la présente invention propose une installation d'électrolyse comprenant des rangées d'électrodes au moins partiellement immergées dans un électrolyte liquide dégageant une ou plusieurs espèces gazeuses de nature corrosive au niveau des électrodes, l'installation comprenant en outre, conformément à l'invention, au moins une membrane de séparation qui est constituée d'un fin renfort en fibres de carbone rigidifié par une matrice carbone, la membrane présentant en outre une partie poreuse perméable aux ions mais imperméable à la ou les espèces gazeuses dégagées au niveau des électrodes.

Ainsi, avec la membrane de séparation de l'invention, il est possible de diminuer la distance entre les cathodes et les anodes adjacentes dans l'installation d'électrolyse et d'optimiser, par conséquent, le rendement de Faraday, et ce même en présence de dégagement d'espèces gazeuses corrosives. En effet, la membrane de l'installation selon l'invention présente une perméabilité qui laisse passer les ions, condition nécessaire à la réaction d'électrolyse, mais sans permettre pour autant le passage des bulles des espèces gazeuses dégagées de chaque côté de la membrane (les ions ayant des dimensions bien inférieures à celles des bulles de gaz). En diminuant la distance entre chaque série d'électrodes, cela permet en outre de pouvoir disposer plus de rangées d'électrodes dans un même volume de cuve et d'augmenter la productivité de l'installation.

La membrane est réalisée en matériau carbone/carbone qui est un matériau particulièrement résistant vis-à-vis du phénomène de corrosion-érosion. Par conséquent, la membrane de l'invention possède une durée de vie importante, ce qui lui assure une grande fiabilité dans sa fonction de séparation des espèces gazeuses.

La membrane de l'installation selon l'invention peut être en matériau carbone/carbone seul, c'est-à-dire non revêtu. Selon une variante de réalisation, la surface de l'une ou des deux faces de la membrane peut être modifiée par traitement ou revêtue avec un ou plusieurs matériaux particuliers afin, par exemple, d'améliorer ou de réduire le mouillage ou de conférer des propriétés électriques particulières.

En outre, en utilisant un renfort fibreux fin densifié par une matrice carbone, on obtient une membrane d'une faible épaisseur qui présente néanmoins une rigidité. La membrane peut en outre présenter une architecture de forme particulière, comme par exemple une forme ondulée, qui permet d'accroître encore sa rigidité.

La membrane selon l'invention présente, dans sa partie poreuse, une épaisseur comprise entre 1,5 mm et 5 mm, ce qui représente un encombrement très faible.

Selon un aspect de l'invention, la membrane comporte des ouvertures traversantes dans le sens de l'épaisseur du renfort. Ces ouvertures ont une largeur comprise sensiblement entre 0,2 mm et 5 mm.

Ces ouvertures peuvent être présentes à l'origine, c'est-à-dire provenir de la porosité intrinsèque de la membrane, ou être usinées dans celle-ci.

Les ouvertures sont de formes quelconques. A titre d'exemples non limitatifs, elle peuvent être notamment sous forme de trous avec un diamètre compris entre 0,2 mm et 5 mm ou sous forme de fentes ayant une largeur comprise entre 0,2 mm et 5 mm. Les ouvertures peuvent être de section variable, c'est-à-dire divergentes ou convergentes selon les bulles de l'espèce gazeuse considérée. Dans le cas d'ouvertures sous forme de fentes ou similaires, les ouvertures peuvent être orientées suivant un angle variant entre 0° et 90° par rapport à la direction longitudinale de la membrane.

Selon un autre aspect de l'invention, les ouvertures sont orientées suivant un angle déterminé par rapport au plan du renfort. Elles peuvent être notamment orientées perpendiculairement ou obliquement par rapport au plan du renfort.

Selon encore un autre aspect de l'invention, la membrane comprend en outre une portion de fixation reliée à la partie poreuse.

La présente invention concerne encore un procédé de fabrication de réalisation d'une installation d'électrolyse comprenant au moins deux rangées d'électrodes au moins partiellement immergées dans un électrolyte liquide dégageant une ou plusieurs espèces gazeuses de nature corrosive au niveau des électrodes, au moins une membrane de séparation étant placée entre les rangées d'électrodes, caractérisé en ce que chaque membrane est réalisée par formation d'un renfort en fibres de carbone, densification dudit renfort par une matrice carbone et la formation d'une partie poreuse dans le renfort densifié, ladite partie poreuse étant perméable aux ions et imperméable à la ou les espèces gazeuses dégagées au niveau des électrodes.

Selon un aspect de l'invention, la membrane présente, dans sa partie poreuse, une épaisseur comprise entre 1,5 mm et 5 mm

Selon un autre aspect de l'invention, on forme dans la partie poreuse des ouvertures traversantes dans le sens de l'épaisseur du renfort. Les ouvertures peuvent être de tout type de forme comme notamment en forme de trous ou de fentes ayant une largeur comprise entre 0,2 mm et 5 mm. La section des ouvertures peut être fixe ou variable (section divergente ou convergente). Les ouvertures peuvent être formées perpendiculairement ou suivant un angle déterminé par rapport au plan du renfort. Dans le cas d'ouvertures sous forme de fentes ou similaires, les ouvertures peuvent être orientées suivant un angle variant entre 0° et 90° par rapport à la direction longitudinale de la membrane.

La partie poreuse peut en outre être formée suivant une architecture particulière permettant de renforcer sa rigidité. Elle peut notamment présenter une forme ondulée.

Le procédé comprend en outre la formation d'une portion de fixation reliée à la partie poreuse afin de permettre l'accrochage de la membrane dans l'installation d'électrolyse et son maintien en position entre les électrodes.

Le procédé peut comprendre en outre une étape de modification ou de revêtement d'au moins une des surfaces de la partie poreuse de la membrane.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1, déjà décrite, est une vue en coupe d'une installation d'électrolyse en fonctionnement ;
- la figure 2 est une vue schématique en perspective d'une plaque en matériau composite C/C à partir de laquelle une membrane de séparation est fabriquée conformément à un mode de réalisation de l'invention ;
- la figure 3 représente une forme générale d'une membrane de séparation usinée dans la plaque de la figure 2 ;
- la figure 4 est une vue en perspective d'une membrane de séparation fabriquée à partir de la plaque de la figure 2 ;
- les figures 5A et 5B sont des vues en section partielle montrant des ouvertures orientées respectivement à 90° et 45° par rapport au plan du renfort de la membrane ;
- la figure 6 est une vue schématique d'un moule et d'un contre-moule utilisés pour former une membrane de séparation conformément à un autre mode de réalisation de l'invention ;
- les figures 7 et 8 sont des vues schématiques respectivement en perspective et en coupe partielle d'un autre mode de réalisation d'une membrane selon l'invention ;
- les figures 9 à 12 sont des vues schématiques partielles d'autres modes de réalisation d'une membrane selon l'invention ;
- la figure 13 est une vue schématique en coupe d'une l'installation d'électrolyse comprenant des membranes de séparation conformes à l'invention ;

### Description détaillée d'un mode de réalisation

Un domaine particulier mais non exclusif d'application de l'invention est celui des installations d'électrolyse destinées à la production d'espèces gazeuses de nature corrosives telles que le fluor ou le chlore par exemple. La présente invention propose de diminuer la distance entre les cathodes et les anodes dans de telles installations afin d'augmenter leur rendement de production. A cet effet, la présente invention propose d'interposer une membrane de séparation entre deux séries d'électrodes adjacentes (cathodes et anodes), la membrane étant constituée d'une fine plaque rigide en matériau composite carbone/carbone (C/C) qui présente une perméabilité vis-à-vis des ions mais qui reste étanche face aux bulles de gaz dégagées au niveau de chaque électrode. La membrane en matériau C/C peut être utilisée telle quelle, c'est-à-dire sans traitement ou revêtement de surface ou, au contraire, être traitée ou revêtue sur une de ses faces ou sur les deux pour, par exemple, améliorer ou réduire sa mouillabilité ou lui conférer des propriétés électriques particulières.

Le matériau C/C confère à la membrane une rigidité propre qui peut être renforcée en donnant à la plaque une architecture particulière (par exemple en créant des ondulations) afin d'éviter des contacts, lors des mouvements du bain d'électrolyte, avec les anodes ou les cathodes.

Afin de réaliser cette perméabilité contrôlée, la membrane comprend, comme expliqué plus loin en détail, une structure poreuse dont les ouvertures ou pores (trous, fentes, etc.) sont dimensionnés pour autoriser le passage des ions mais pas celui des bulles de gaz. Cela est possible car les ions présentent des dimensions bien inférieures à celles des bulles de gaz.

En permettant le passage des ions tout en empêchant les espèces gazeuses dégagées respectivement de chaque côté de la membrane d'entrer en contact, il est possible de diminuer la distance d'espacement entre deux séries d'électrodes qui est habituellement nécessaire en l'absence d'une telle membrane pour éviter tout contact entre les espèces gazeuses. Afin de réduire significativement la distance entre les électrodes et d'optimiser au mieux le rendement et la productivité de l'installation, il faut pouvoir disposer d'une membrane la plus fine possible. Toutefois, cette membrane doit pouvoir conserver son intégrité structurelle vis-à-vis du phénomène de corrosion-érosion pour assurer sa fonction de séparation entre les espèces gazeuses. En particulier, la porosité de la membrane permettant le passage des ions ne doit pas augmenter sous l'effet du phénomène de corrosion-érosion au risque de devenir perméable aux bulles de gaz dégagées.

A cet effet, la membrane selon l'invention est réalisée en matériau composite carbone/carbone (C/C) qui, de façon connue, est un matériau formé d'un renfort en fibres de carbone densifié par une matrice en carbone et qui présente une très bonne résistance à la corrosion ainsi qu'à l'érosion.

La fabrication de pièces en matériau composite C/C est bien connue. Elle comprend la réalisation d'une préforme fibreuse carbone dont la forme est voisine de celle de la pièce à fabriquer et la densification de la préforme par la matrice.

La préforme fibreuse constitue le renfort de la pièce dont le rôle est essentiel vis-à-vis des propriétés mécaniques. La préforme est obtenue à partir de textures fibreuses : fils, câbles, tresses, tissus, feutres... La mise en forme est réalisée par bobinage, tissage, empilage, et éventuellement aiguilletage de strates bidimensionnelles de tissu ou de nappes de câbles...

La densification du renfort fibreux peut être réalisée par voie liquide (imprégnation par une résine précurseur de la matrice carbone et transformation par réticulation et pyrolyse, le processus pouvant être répété) ou par voie gazeuse (infiltration chimique en phase vapeur de la matrice carbone).

Des modes de réalisation de membranes de séparation conformes à l'invention vont maintenant être décrits.

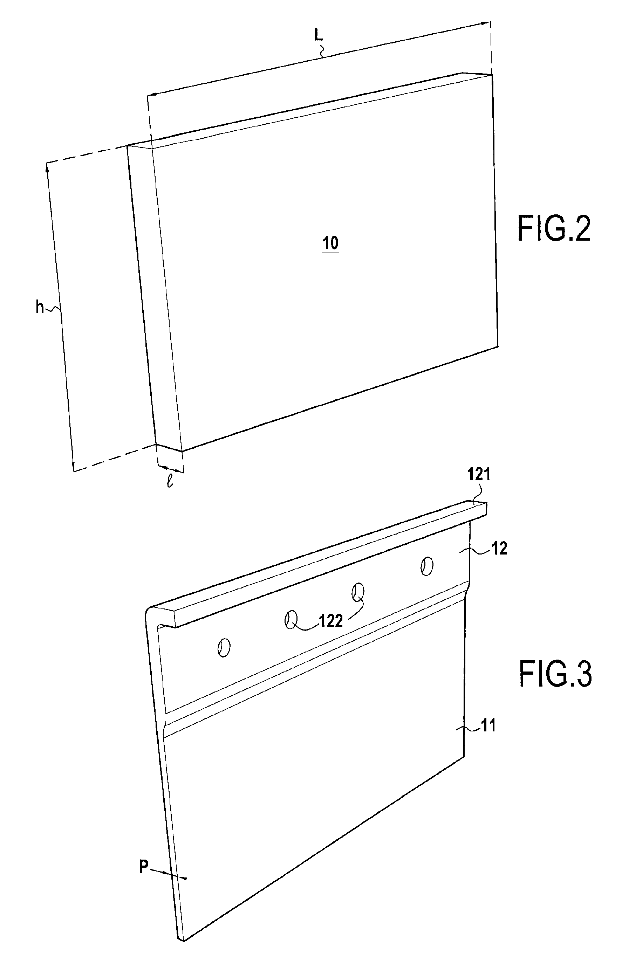

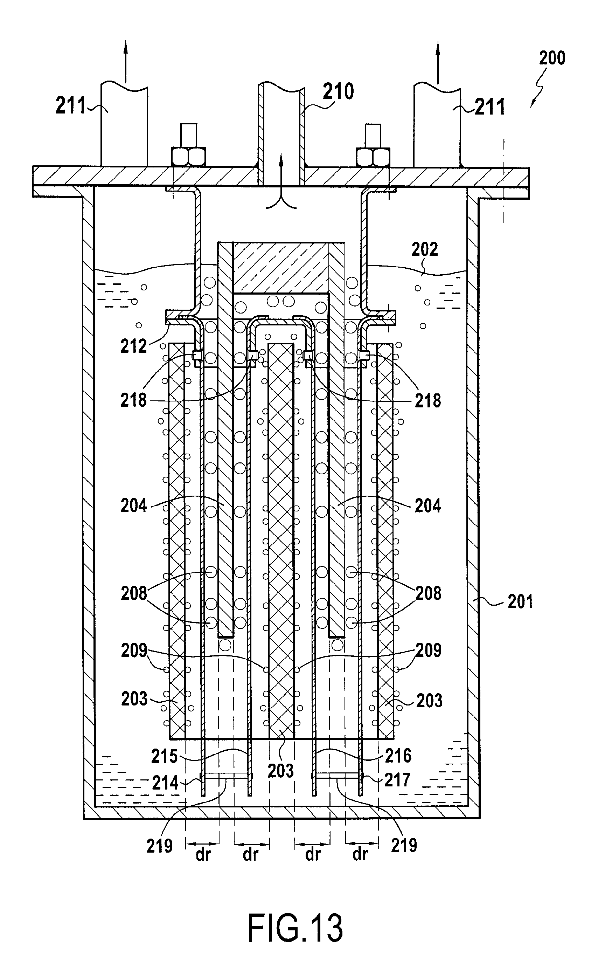

Conformément à un premier mode de mise en oeuvre du procédé de fabrication d'une membrane de séparation selon l'invention, on réalise une préforme fibreuse à partir d'un tissu carbone aiguilleté. La préforme est ensuite densifiée par infiltration chimique en phase vapeur (CVI) de pyrocarbone jusqu'à obtenir une densité de matériau C/C d'au moins 1,4. Comme représentée sur la figure 2, on obtient alors une plaque 10 en matériau composite C/C qui présente par exemple une longueur L de 1000 mm, une largeur l de 20 mm et une hauteur h de 500 mm et qui est suffisamment rigide pour être usinée pour obtenir la forme définitive de la membrane. Plus précisément, la plaque 10 est usinée pour former comme illustrée sur la figure 3, une partie 11, dite zone couvrante, d'une épaisseur P comprise entre 1,5 mm et 5 mm. La zone couvrante 11 correspond à la partie poreuse de la membrane qui est destinée à séparer les flux gazeux dégagés par les anodes et les cathodes tout en laissant passer les ions. On usine également, dans la partie supérieure de la plaque 10, une portion de fixation 12 comportant un talon d'accrochage 121 et des orifices de fixation 122 permettant le passage d'organes de fixation (des vis par exemple) comme expliqué plus loin en relation avec la figure 13.

Une fois la forme définitive usinée, on perce des ouvertures dans la zone couvrante 11, par exemple au moyen d'un jet d'eau sous pression. Les ouvertures peuvent être de formes quelconques comme par exemple des trous, des fentes, etc. La taille des ouvertures (par exemple diamètre des trous ou largeur des fentes) est comprise entre 0,2 mm et 5 mm.

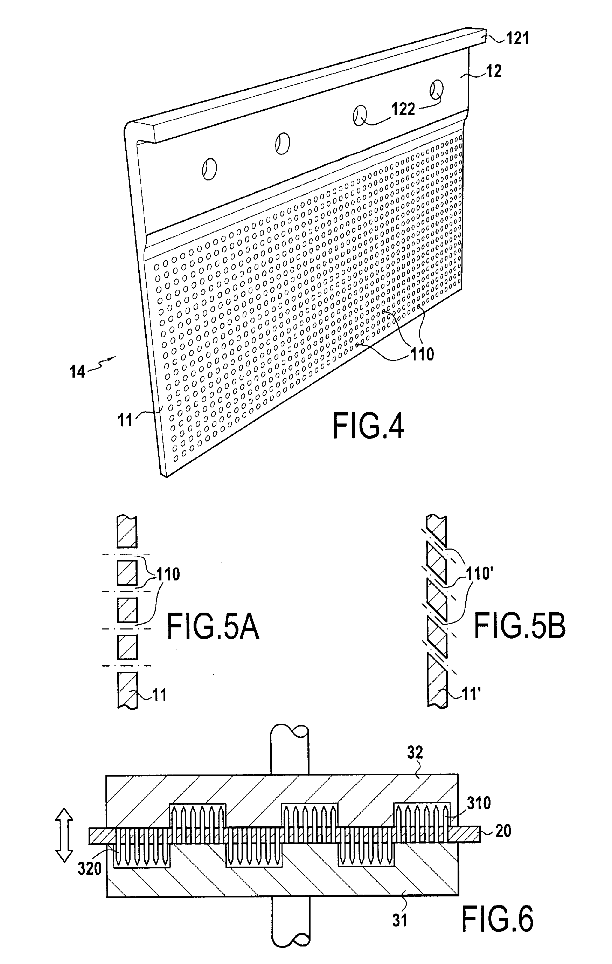

Comme représentée sur la figure 4, on obtient une membrane 14 comprenant une zone couvrante 11 comportant une pluralité d'ouvertures sous forme de trous 110 et correspondant à la partie poreuse de la membrane ainsi qu'une portion de fixation 12. Les trous 110 de la zone couvrante 11 peuvent être orientés perpendiculairement par rapport au plan de la membrane comme illustrés sur la figure 5A. Toutefois, les trous peuvent être orientés suivant un angle quelconque par rapport au plan du renfort de la membrane, comme par exemple les trous 110' de la zone couvrante 11' représentés sur la figure 5B qui sont orientés d'un angle de 45° par rapport au plan du renfort.

La membrane 14 peut être utilisée telle quelle. Toutefois, la membrane 14 peut subir des traitements supplémentaires comme une infiltration supplémentaire de pyrocarbone pour calibrer les ouvertures percées, un dépôt d'un matériau permettant de changer la mouillabilité de la membrane (dépôt SiC par exemple), ou encore un traitement permettant de modifier les propriétés de surface de la membrane.

Conformément à un autre mode de mise en oeuvre du procédé de fabrication d'une membrane de séparation de l'invention, on réalise une préforme fibreuse à partir d'un tissu carbone aiguilleté d'une épaisseur de 12 mm environ. Comme illustrée sur la figure 6, une préforme 20 est mise en forme entre un moule 31 et un contre-moule 32, chacun comprenant respectivement au niveau de la partie poreuse à former dans la membrane des picots 310 et 320. L'autre partie du moule et du contre-moule (non représentée sur la figure 6) présentant une forme correspondante à la portion de fixation à former.

On consolide ensuite le renfort ainsi maintenu en forme par voie liquide, c'est-à-dire en imprégnant le renfort avec une résine précurseur de carbone puis en transformant la résine en matrice carbone par réticulation et pyrolyse.

Une fois la pièce démoulée, on procède à un usinage pour ajuster éventuellement l'épaisseur de la zone couvrante, entre 1,5 mm et 5 mm, et la forme de la portion de fixation ainsi que pour percer les orifices de fixation.

On obtient alors une membrane similaire à la membrane présentée dans la figure 4 qui peut en outre, comme expliqué précédemment, être utilisée telle quelle ou subir des traitements supplémentaires.

Selon la forme des ouvertures que l'on souhaite obtenir, les picots peuvent avoir une forme adaptée comme par exemple une forme cylindrique, triangulaire ou carrée avec une section fixe ou variable.

Selon une variante de mise en oeuvre, la membrane peut être réalisée comme expliqué ci-dessus mais en utilisant un moule et un contre-moule sans picots. Dans ce cas, les ouvertures sont réalisées après démoulage, par exemple avec un jet d'eau sous pression.

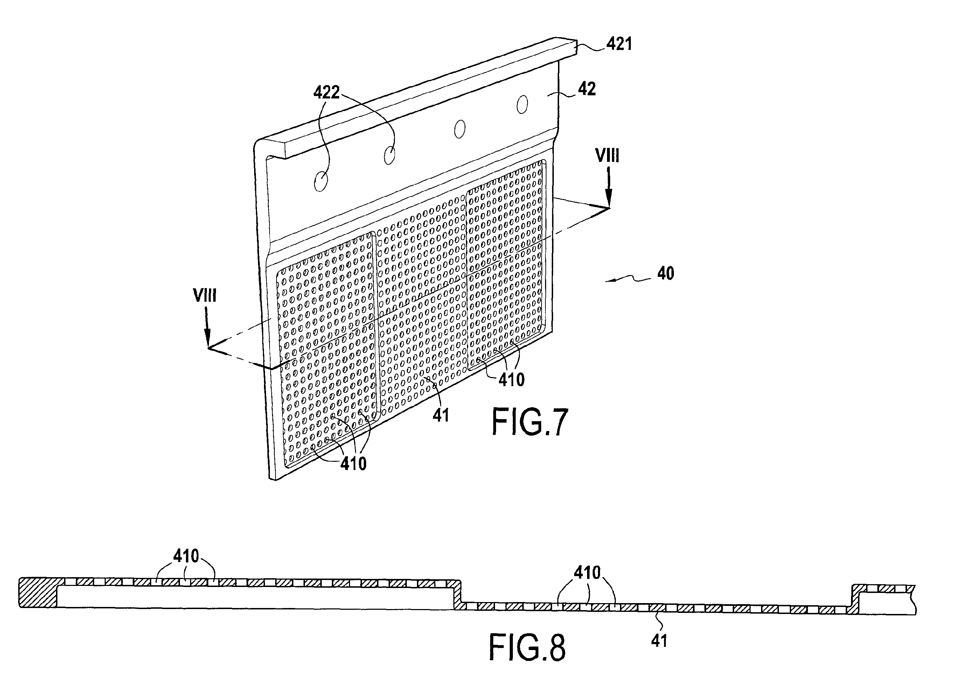

Les figures 7 et 8 illustrent un mode de réalisation d'une membrane de séparation 40 qui diffère de celle de la figure 4 en ce qu'elle présente une forme ondulée au niveau de sa zone couvrante 41. Cette architecture particulière permet de renforcer la rigidité de la membrane et, par conséquent, la tenue de cette dernière vis-à-vis des mouvements du bain d'électrolyte. La membrane 40 comprend, comme la membrane 14 de la figure 4, une pluralité d'ouvertures 41 au niveau de la zone couvrante définissant la partie poreuse de la membrane et une portion de fixation 42 munie d'un talon d'accrochage 421 et d'orifices de fixation 422. Les ondulations présentés par la membrane 40 sont d'une amplitude très faible et ne pénalisent pas, par conséquent, la réduction de distance entre les anodes et les cathodes.

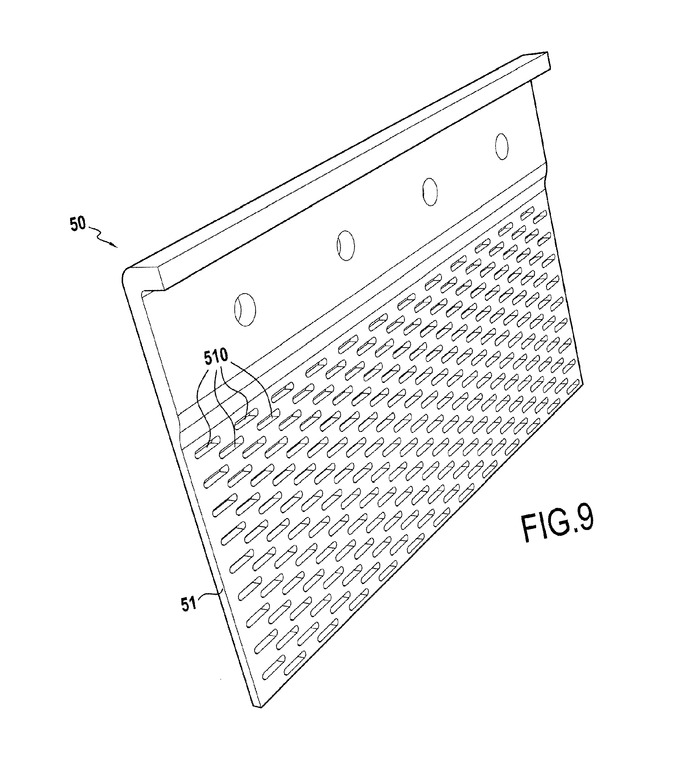

La figure 9 représente encore un autre mode réalisation d'une membrane de séparation 50 qui diffère de celle de la figure 4 en ce qu'elle comporte, à la place de trous, des fentes 510 au niveau de sa zone couvrante 51. Les fentes peuvent être orientées suivant un angle variant entre 0° et 90° par rapport à la direction longitudinale de la membrane (sur la figure 9 les fentes sont orientées de 0°). Par ailleurs, les fentes peuvent traverser l'épaisseur de la membrane suivant une direction perpendiculaire (comme les trous de la figure 5A) ou suivant un autre angle, comme par exemple un angle de 45° par rapport au plan de la zone couvrante (comme les trous de la figure 5B).

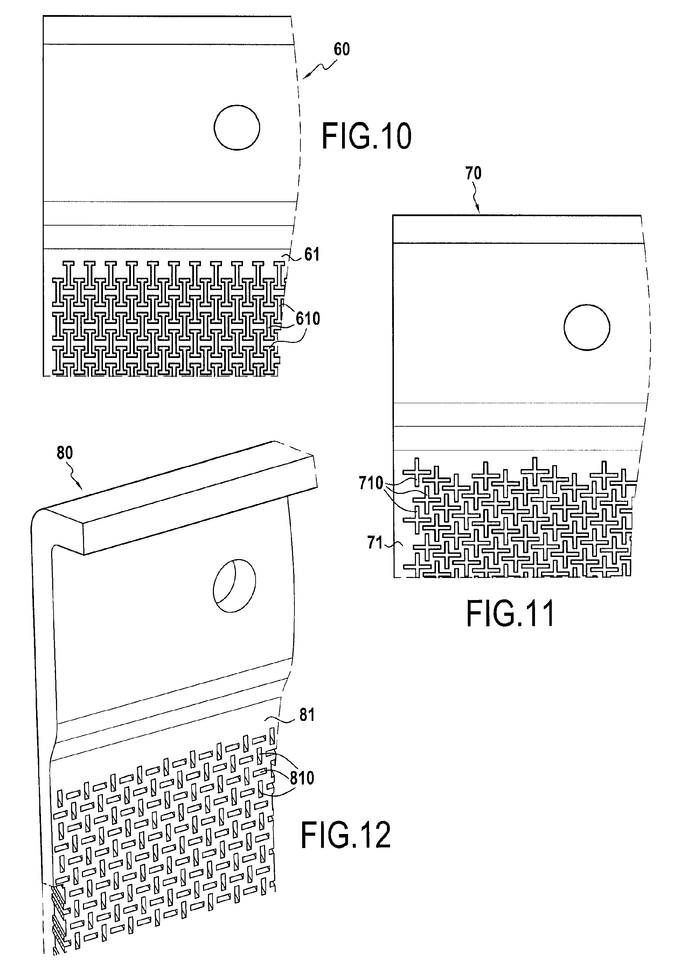

Les figures 10 à 12 illustrent d'autres modes de réalisation de membranes de séparation qui diffèrent de ceux précédemment décrits en ce qu'ils présentent des ouvertures de formes différentes. La figure 10 représente une membrane 60 qui comporte dans sa zone couvrante 61 des ouvertures 610 en forme de double "T". La figure 11 représente une membrane 70 qui comporte dans sa zone couvrante 71 des ouvertures 710 en forme de croix. La figure 11 représente une membrane 80 qui comporte dans sa zone couvrante 81 des ouvertures 810 en forme de fentes orientées alternativement dans une direction parallèle et dans une direction perpendiculaire par rapport à la direction longitudinale de la membrane. La largeur des ouvertures 610, 710 et 810 est comprise entre 0,2 mm et 5 mm. Par ailleurs, les ouvertures 610, 710 et 810 peuvent être ménagées dans l'épaisseur de la membrane suivant une direction perpendiculaire (comme les trous de la figure 5A) ou suivant un autre angle, comme par exemple un angle de 45° par rapport au plan de la zone couvrante (comme les trous de la figure 5B).

Les membranes décrites précédemment peuvent être utilisées telles quelles, c'est-à-dire sans traitement particulier après leur fabrication. Toutefois, après leur réalisation, les membranes peuvent subir des traitements supplémentaires destinés à modifier ou à conférer des propriétés particulières de la membrane. Ainsi, le matériau C/C des membranes selon l'invention peut être revêtu d'un matériau ou plusieurs matériaux supplémentaires tels que du carbure de silicium, du Téflon®, ou tout autre matériau carboné isolant. Les membranes peuvent également subir des traitements, comme par exemple des traitements thermiques ou des oxydations de surface, afin de modifier leurs propriétés de surface.

La figure 13 illustre un exemple montrant la réduction de distance entre cathodes et anodes qui peut être réalisée grâce à l'utilisation de membranes de séparation de la présente invention. Dans cet exemple, on utilise une installation d'électrolyse 200 comparable à celle déjà décrite dans la figure 1 en ce qu'elle comprend une cuve 201 de même dimension et contenant un électrolyte 202, par exemple une solution d'acide fluorhydrique (HF), dans lequel sont disposés des cathodes 203 et des anodes 204. L'installation 200 comprend en outre, conformément à l'invention, quatre membranes de séparation 214 à 217 du type de celle illustrée dans la figure 4 et qui sont placées respectivement entre les rangées de cathodes 103 et d'anodes 104 adjacentes. Les membranes 214 à 217 sont fixées contre le diaphragme 212 au niveau de leur portion de fixation et au moyen de vis 218. Des entretoises 219 peuvent en outre être fixées entre deux membranes adjacentes au niveau de leur extrémité inférieure.

Puisque, comme décrit précédemment, chaque membrane comporte une zone couvrante dans laquelle est ménagée une pluralité d'ouvertures, les ions peuvent être échangés entre les cathodes et les anodes pour permettre la réaction d'électrolyse. Toutefois, si les ouvertures des membranes permettent le passage des ions, elles empêchent les bulles de fluor gazeux 208 dégagées au niveau des anodes 204 et les bulles d'hydrogène 209 au niveau des cathodes 203 de traverser la membrane.

Par conséquent et comme illustrée sur la figure 13 en comparaison avec la figure 1, la distance d (figure 1) habituellement nécessaire entre les cathodes et les anodes pour empêcher un mélange entre l'hydrogène et le fluor peut, grâce aux membranes de séparation de l'invention, être réduite significativement. En effet, comme illustrées sur la figure 13, les électrodes sont espacées d'une distance réduite dr qui n'est limitée que par l'espace nécessaire entre une membrane et une électrode pour permettre le dégagement et la remontée des bulles d'espèces gazeuses dégagées au niveau des électrodes.

En permettant de rapprocher les anodes et les cathodes les unes des autres sans risque de mélange gazeux, on améliore le rendement de Faraday de l'installation. En outre, comme montré sur la figure 13, pour un même volume de cuve, le rapprochement des anodes et des cathodes permet de libérer de l'espace pour disposer des rangées de cathodes et d'anodes supplémentaires et augmenter ainsi la productivité de l'installation d'électrolyse.

## Revendications

1. Installation d'électrolyse (200) comprenant au moins deux rangées d'électrodes (203, 204) au moins partiellement immergées dans un électrolyte liquide (202) dégageant une ou plusieurs espèces gazeuses (208, 209) de nature corrosive au niveau des électrodes, au moins une membrane de séparation (14) étant disposée entre deux rangées d'électrodes adjacentes,
**caractérisée en ce que** la membrane (14) est constituée d'un renfort en fibres de carbone rigidifié par une matrice carbone et **en ce que** ladite membrane présente au moins une partie poreuse (11) perméable aux ions et imperméable à la ou les espèces gazeuses (208, 209) dégagées au niveau des électrodes (203, 204).

2. Installation selon la revendication 1, **caractérisée en ce que** la partie poreuse (11) présente une épaisseur comprise entre 1,5 mm et 5 mm.

3. Installation selon la revendication 1 ou 2, **caractérisée en ce que** la partie poreuse (11) comporte des ouvertures (110) traversantes dans le sens de l'épaisseur du renfort.

4. Installation selon la revendication 3, **caractérisée en ce que** les ouvertures (110) présentent une largeur comprise entre 0,2 mm et 5 mm.

5. Installation selon la revendication 3 ou 4, **caractérisée en ce que** les ouvertures (110, 110') sont orientées suivant un angle déterminé par rapport au plan du renfort.

6. Installation selon la revendication 4 ou 5, **caractérisée en ce que** les ouvertures (510, 810) présentent une forme de fentes orientées suivant un angle variant entre 0° et 90° par rapport à la direction longitudinale de la membrane.

7. Installation selon la revendication 3, **caractérisée en ce que** la section des ouvertures est variable dans la direction de l'épaisseur de la membrane.

8. Installation selon l'une quelconque des revendications 1 à 7, **caractérisée en ce que** la partie poreuse (41) présente une forme ondulée.

9. Installation selon l'une quelconque des revendications 1 à 8, **caractérisée en ce que** ladite au moins une membrane comprend en outre une portion de fixation (12) reliée à la partie poreuse (11).

10. Procédé de réalisation d'une installation d'électrolyse comprenant au moins deux rangées d'électrodes (203, 204) au moins partiellement immergées dans un électrolyte liquide (202) dégageant une ou plusieurs espèces gazeuses (208, 209) de nature corrosive au niveau des électrodes, au moins une membrane de séparation (214) étant placée entre les rangées d'électrodes,
**caractérisé en ce que** ladite au moins membrane est réalisée par formation d'un renfort en fibres de carbone, densification dudit renfort par une matrice carbone et la formation d'une partie poreuse (11) dans le renfort densifié, ladite partie poreuse étant perméable aux ions et imperméable à la ou les espèces gazeuses (208, 209) dégagées au niveau des électrodes (203, 204).

11. Procédé selon la revendication 10, **caractérisé en ce que** la partie poreuse (11) présente une épaisseur comprise entre 1,5 mm et 5 mm.

12. Procédé selon la revendication 10 ou 11, **caractérisé en ce qu'**on forme dans la partie poreuse (11) des ouvertures traversantes dans le sens de l'épaisseur du renfort.

13. Procédé selon la revendication 12, **caractérisé en ce qu'**on forme des ouvertures (110) ayant une largeur comprise entre 0,2 mm et 5 mm.

14. Procédé selon l'une quelconque des revendications 12 ou 13, **caractérisé en ce que** les ouvertures (110, 100') sont orientées suivant un angle déterminé par rapport au plan du renfort.

15. Procédé selon la revendication 13 ou 14, **caractérisé en ce que** les ouvertures (510, 810) présentent une forme de fentes orientées suivant un angle variant entre 0° et 90° par rapport à la direction longitudinale de la membrane

16. Procédé selon la revendication 12, **caractérisé en ce que** la section des ouvertures est variable dans la direction de l'épaisseur de la membrane.

17. Procédé selon l'une quelconque des revendications 10 à 16, **caractérisé en ce que** la partie poreuse (41) est formée suivant une forme ondulée.

18. Procédé selon l'une quelconque des revendications 10 à 17, **caractérisé en ce qu'**il comprend en outre une étape de modification ou de revêtement d'au moins une des surfaces de la partie poreuse de la membrane.

19. Procédé selon l'une quelconque des revendications 10 à 18, **caractérisé en ce qu'**on forme en outre une portion de fixation (12) reliée à la partie poreuse.
